# EUROPÄISCHE PATENTANMELDUNG

(11) **EP 1 102 088 A2**
(43) Veröffentlichungstag der Anmeldung: **23.05.2001**
(21) Anmeldenummer: 00105340.4
(22) Anmeldetag: 16.03.2000
(51) Int. Cl.: G01S 13/10, G01S 7/285

(54) **Verfahren und Vorrichtung zum Bestimmen des Abstands zu einem Objekt mittels eines gepulsten elektromagnetischen Signals**

(30) Priorität: 20.11.1999 DE 19955637
(71) Anmelder: Valeo Schalter und Sensoren GmbH, 74321 Bietigheim-Bissingen (DE)
(72) Erfinder: Reiche, Martin, 53639 Königswinter (DE); Lill, Anton, 74348 Lauffen (DE); Kiemes, Jochen, 70499 Stuttgart (DE)
(74) Vertreter: Dreiss, Fuhlendorf, Steimle & Becker

(57) **Zusammenfassung**

Die Erfindung betrifft ein Verfahren und eine Vorrichtung (1) zum Bestimmen des Abstands zu einem Objekt (3) mittels eines gepulsten elektromagnetischen Signals (2). Die Laufzeit des Signals (2) zu dem Objekt (3) und wieder zurück wird im Rahmen eines vergleichenden Messprinzips (Equivalent Time Sampling, ETS) durch Vergleich des Empfangssignals (4) mit dem um eine variable Verzögerung verzögerten Sendesignal (5) ermittelt. Aus der ermittelten Laufzeit wird der Abstand zu dem Objekt (3) bestimmt. Im Rahmen des vergleichenden Messprinzips wird das Empfangssignal (4) in einem homodynen Mischer (32; 33) mit dem verzögerten Sendesignal (5) gemischt. Um die Auswirkung einer Hochpasskopplung von Signalfiltern (36, 37) und Verstärker (38, 39), die den Mischern (32, 33) nachgeordnet sind, auf das Ausgangssignal (34; 35) des Mischers (32; 33) zu reduzieren bzw. sogar ganz zu vermeiden, ohne ein heterodynes System einsetzen zu müssen, wird vorgeschlagen, dass das Sendesignal (2) und/oder das Ausgangssignal (34; 35) des Mischers (32; 33) derart moduliert wird, dass das Ausgangssignal (34; 35) des Mischers (32; 33) auf eine höhere Frequenzebene ungleich Null angehoben wird.

## Beschreibung

Die vorliegende Erfindung betrifft ein Verfahren zum Bestimmen des Abstands zu einem Objekt mittels eines gepulsten elektromagnetischen Signals, wobei die Laufzeit des Signals zu dem Objekt und wieder zurück im Rahmen eines vergleichenden Messprinzips durch Vergleich des Empfangssignals mit dem um eine variable Verzögerung verzögerten Sendesignal ermittelt und aus der ermittelten Laufzeit der Abstand zu dem Objekt bestimmt wird, und wobei im Rahmen des vergleichenden Messprinzips das Empfangssignal in einem homodynen Mischer mit dem verzögerten Sendesignal gemischt wird. Die Erfindung betrifft außerdem eine Vorrichtung zum Bestimmen des Abstands zu einem Objekt mittels eines gepulsten elektromagnetischen Signals, wobei die Vorrichtung Mittel zum Ermitteln der Laufzeit des Signals zu dem Objekt und wieder zurück im Rahmen eines vergleichenden Messprinzips durch Vergleich des Empfangssignals mit dem um eine variable Verzögerung verzögerten Sendesignal, Mittel zum Bestimmen des Abstands zu dem Objekt aus der ermittelten Laufzeit und einen homodynen Mischer zum Mischen des Empfangssignals im Rahmen des vergleichenden Messprinzips mit dem verzögerten Sendesignal aufweist.

Derartige Verfahren werden bspw. bei Radar-Einparkhilfen oder bei Radar-Abstandsregelungsvorrichtungen im Kraftfahrzeugbereich eingesetzt. Ein derartiges Verfahren ist bspw. aus der deutschen Patentanmeldung DE 199 19 227 bekannt. Dort wird ein Verfahren zum Bestimmen des Abstands zu einem Objekt mittels eines gepulsten elektromagnetischen Signals offenbart. Die Laufzeit des Signals zu dem Objekt und wieder zurück wird im Rahmen eines vergleichenden Messprinzips, das in der Fachliteratur als Equivalent Time Sampling (ETS) bekannt ist, ermittelt. Dazu wird das Empfangssignal mit dem um eine variable Verzögerung verzögerten Sendesignal verglichen. Durch das vergleichende Messprinzip werden die extrem kurzen Pulslaufzeiten des Signals auf eine wesentlich längere Zeitskala gestreckt. Dazu wird eine langsam variierende Änderung der internen Verzögerung der Sendepulsfolge vorgegeben, wobei sich diese Verzögerung über den zu vermessenden realen Laufzeitbereich schiebt. Aus dem Vergleich der intern verzögerten Pulsfolge des verzögerten Sendesignals mit der empfangenen Pulsfolge des Empfangssignals wird die externe Laufzeit und dadurch der Abstand zu dem Objekt bestimmt. Zur Durchführung des Vergleichs der intern verzögerten Sendepulsfolge mit der extern verzögerten Empfangspulsfolge wird das Empfangssignal in einem homodynen Mischer mit dem verzögerten Sendesignal auf eine Frequenzebene gleich Null gemischt.

In dem Pfad des Ausgangssignals des Mischers sind Filterund Verstärkerschaltungen angeordnet, die üblicherweise über Koppelkondensatoren DC-frei miteinander verbunden sind (sog. Hochpasskopplung). Dies ist notwendig, um bspw. Offsetdrifts eliminieren und Störquellen im niederfrequenten Bereich unterdrücken zu können.

Wie in Fig. 3 und Fig. 4 gezeigt, ist das Ausgangssignal bzw. das Spektrum des Ausgangssignals des homodynen Mischers nicht DC-frei. Demgemäß führt die Hochpasskopplung (Fig. 5) zu einer Verzerrung und Verbreiterung der ursprünglichen Signalform im Zeitbereich (Fig. 7). Die Amplitude des hochpassgekoppelten Ausgangssignals ist vermindert und der Signalpuls verbreitert. Das führt zu einem Nachklingen und zu einer verschlechterten Auflösung bei der nachfolgenden Signalverarbeitung. Falls in einem großen Nutzsignal auch kleinere Nutzsignale enthalten sind, steigt dadurch die Gefahr, dass die kleineren Nutzsignale nicht als solche von dem großen Nutzsignal unterschieden werden können. Das kann dazu führen, dass kleinere Objekte in einem zu überwachenden Bereich vor oder hinter einem Kraftfahrzeug unerkannt bleiben, falls das verzerrte Signal eines größeren Objektes mit einem Abstand in einer ähnlichen Größenordnung wie der Abstand des kleineren Objektes das Signal dieses kleineren Objektes überlagert und abschattet.

Die Pulsbreite des Ausgangssignals des Mischers ist u. a. von der Pulsbreite der Hochfrequenzpulse des Sendesignals und von der Sweepgeschwindigkeit, mit der die Verzögerung des Sendesignals variiert wird, abhängig. Die kurzen Hochfrequenzpulse werden mit einem Umsetzungsfaktor, der sich aus dem Verhältnis der Lichtgeschwindigkeit zu der Sweepgeschwindigkeit ergibt, in die gestreckte äquivalente Zeitebene der Pulse des Ausgangssignals des Mischers umgesetzt. Es ist somit möglich, den Umsetzungsfaktor dadurch zu verkleinern, dass die Sweepgeschwindigkeit relativ groß gewählt wird. Dadurch wird die Pulsbreite des Ausgangssignals in der Zeitebene vermindert und das Spektrum der Pulse weiter gespreizt. Das führt dazu, dass der relative Anteil des Signalspektrums, der durch den Hochpass unterdrückt wird, vermindert wird. Die Auswirkung der Hochpasskopplung auf das Ausgangssignal des Mischers, insbesondere die Verzerrung des hochpassgekoppelten Ausgangssignals, kann auf diese Weise zwar etwas vermindert werden. Eine weitergehende alternative Verminderung der Verzerrung und Verbreiterung der ursprünglichen Signalform wäre jedoch wünschenswert, da die Wahl einer höheren Sweepgeschwindigkeit den unerwünschten Nachteil der Minderung der Signalamplitude mit sich bringt, weil weniger HF-Einzelpulse zum äquivalenten ZF-Gesamtpuls aufintegriert werden.

Aus dem Stand der Technik sind als Alternative zu den homodynen Systemen auch sogenannte heterodyne Systeme bekannt, die einen Kohärenzoszillator im Sendepfad aufweisen, dessen Frequenz mit einem stabilisierten Träger-Oszillator zur Sendefrequenz hochgemischt wird. Im Empfangspfad wird das Empfangssignal nur mit dem stabilisierten Oszillator herunter gemischt, so dass das auszuwertende Empfangssignal auf einer Frequenzebene ungleich Null vorliegt, die der Frequenz des Kohärenzoszillators entspricht. Heterodyne Systeme haben gegenüber homodynen Systemen allerdings den Nachteil, dass sie eines höheren technischen Aufwands im HF-Teil des Systems bedürfen, da ein zusätzlicher Kohärenzoszillator und ein zusätzlicher Mischer benötigt wird.

Es ist deshalb die Aufgabe der vorliegenden Erfindung, die Auswirkung der Hochpasskopplung von Filter- und Verstärkerschaltungen, die dem Mischer nachgeordnet sind, auf das Ausgangssignal des Mischers, insbesondere eine Verzerrung und Verbreiterung des hochpassgekoppelten Ausgangssignals, reduziert bzw. sogar ganz vermieden werden kann, ohne ein heterodynes System einsetzen zu müssen. Zur Lösung dieser Aufgabe schlägt die Erfindung ausgehend von dem Verfahren der eingangs genannten Art vor, dass das Sendesignal und/oder das Ausgangssignal des Mischers derart moduliert wird, dass das Spektrum des Ausgangssignals des Mischers auf eine höhere Frequenzebene ungleich Null angehoben wird.

Die Nutzung eines Ausgangssignals des Mischers, dessen Spektrum auf eine höhere Frequenzebene angehoben ist, ist insofern vorteilhaft, als dass das Ausgangssignal des Mischers dann nicht mehr von der Hochpasskopplung von Filter- und Verstärkerschaltungen, die dem Mischer nachgeordnet sind, negativ beeinflusst wird. Der relative Anteil des Signalspektrums, der durch den Hochpass unterdrückt wird, wird entscheidend vermindert. Dadurch wird insbesondere eine Verzerrung und Verbreiterung des hochpassgekoppelten Ausgangssignals des Mischers reduziert bzw. sogar ganz vermieden.

Es sind verschiedene Verfahren denkbar, wie das Spektrum des Ausgangssignals des Mischers auf eine höhere Frequenzebene ungleich Null angehoben werden kann. Einige werden im Folgenden als bevorzugte Ausführungsbeispiele der vorliegenden Erfindung näher erläutert.

Gemäß einer ersten bevorzugten Ausführungsform der vorliegenden Erfindung wird vorgeschlagen, dass das Ausgangssignal des Mischers durch einen weiteren Mischer mit einem Mischsignal einer vorgegebenen Frequenz ungleich Null gemischt und auf die höhere Frequenzebene angehoben wird. Das Mischsignal wird vorteilhafterweise von einem Oszillator erzeugt. Der Oszillator erzeugt vorzugsweise ein sinusförmiges niederfrequentes Mischsignal. Die weiteren Mischer sind deshalb vorzugsweise als Niederfrequenz (NF)-Mischer ausgebildet. Die Frequenz des Mischsignals gibt die Höhe der Frequenzebene vor. Die in dem weiteren Signalpfad des Ausgangssignals des NF-Mischers folgenden Hochpassbzw. Bandpassfilter-Schaltungen können auf die vorgegebene Frequenzebene adaptiert werden.

Gemäß einer zweiten bevorzugten Ausführungsform der vorliegenden Erfindung wird vorgeschlagen, dass das Ausgangssignal des Hochfrequnez (HF)-Mischers durch einen analogen Modulationsschalter, der durch ein Rechtecksignal einer vorgegebenen Frequenz ungleich Null geschaltet wird, auf die höhere Frequenzebene angehoben wird. Diese Ausführungsform ist wesentlich kostengünstiger als die erste Ausführungsform mit dem oder den weiteren NF-Mischern und dem NF-Oszillator. Im Prinzip handelt es sich bei dieser Ausführungsform um eine Pulsamplitudenmodulation (PAM) des Ausgangssignals der Hochfrequenz-Mischer. Das Ausgangssignal bildet dabei das zu modulierende Quellsignal, dessen Spektrum auf die Zeiger der Harmonischen des schaltenden Rechtecksignals gefaltet wird. Die Zeiger erhält man als Koeffizienten der Fourierreihe des periodischen Rechtecksignals. In der nachfolgenden Hochpass- bzw. Bandpassfilterung läßt man vorzugsweise die erste Harmonische ungedämpft. Die Spektren um die Harmonischen höherer Ordnung und bei Null werden dagegen gedämpft. Damit wird die Systembandbreite auf das notwendige Minimum der Signalnutzbandbreite des Spektrums an der ersten Harmonischen reduziert und dadurch das Systemrauschen auf ein Minimum begrenzt. Der analoge Modulationsschalter wird bspw. von einem Rechtecksignal gesteuert, das von einem Mikrocomputer erzeugt wird, der ebenfalls den Ablauf des erfindungsgemäßen Verfahrens steuert.

An einem Pulse-Width-Modulation (PWM)-Ausgang eines Mikrocomputers steht bspw. ein PWM-Signal mit einer variablen Tastrate zur Verfügung. Die reziproke Periode des PWM-Signals gibt als erste Harmonische des Rechtecksignals die Höhe der Frequenzebene vor. Die Tastrate dieses PWM-Signals ist im allgemeinen ebenfalls frei wählbar.

Gemäß einer vorteilhaften Weiterbildung der vorliegenden Erfindung wird vorgeschlagen, dass das Tastverhältnis des schaltenden Rechtecksignals für eine variable Verstärkung des Ausgangssignals des Mischers verwendet wird. Die Größe der Zeiger der ersten Harmonischen des Rechtecksignals hängt von dessen Tastverhältnis ab. Mathematisch wird dies durch eine Si-Funktion als Einhüllende der Zeiger der Fourierreihe beschrieben. Verkleinert sich das Tastverhältnis, reduziert sich damit auch der Zeiger der ersten Harmonischen und damit das Ergebnis der Faltung des Signalspektrums auf ebendiesen Zeiger. Sofern sich bspw. das Tastverhältnis von 1% auf 50% variieren läßt, entspricht dies einer steuerbaren Signaldynamik von etwa 34dB.

Vorteilhafterweise wird vorgeschlagen, dass der analoge Modulationsschalter mit der Abtastfrequenz eines in dem Signalpfad des Ausgangssignals dem Schalter nachgeordneten A/D-Wandlers getriggert wird, wobei die Abtastung des gefilterten und verstärkten Signals mit dem A/D-Wandler um die Signallaufzeit durch Filter- und/oder Verstärkerschaltungen, die zwischen dem Schalter und dem A/D-Wandler angeordnet sind, verzögert wird. Die Verzögerung aufgrund der Signallaufzeit durch die Filterund/oder Verstärkerschaltungen wird vorzugsweise durch ein autokalibrierendes Verfahren (sog. Auto-Gain-Control (AGC)) bestimmt. Das autokalibrierende Verfahren ist bspw. als eine Softwareroutine in der Steuerung des erfindungsgemäßen Verfahrens ausgebildet. Es wird des weiteren vorgeschlagen, dass von dem Algorithmus des autokalibrierenden Verfahrens ein stets vorhandenes Signal als Gütekriterium ausgenutzt wird. So kann bspw. die Optimierung der Amplitude des Sende-Empfangskanal-Übersprechens (Eigenecho) im Nahbereich als Gütekriterium ausgenutzt werden.

Diese Ausführungsform hat den Vorteil, dass die synchronisierte Abtastung auf das geschaltete Ausgangssignal einem idealen Kammfilter entspricht, das genau auf die Vielfachen der ersten Harmonischen der Abtastrate abgestimmt ist. Damit ist es nicht mehr notwendig, sich durch die ursprünglich vorgesehenen Bandpassschaltungen ausschließlich auf die Umgebung der ersten Harmonischen zu konzentrieren, sondern es reicht eine nichtadaptive unspezifische Hochpassschaltung, die hauptsächlich den DC-Anteil eliminiert. Die Synchronisation zwischen Schaltermodulation und Abtastung entspricht im Prinzip einer einfachen Synchrondemodulation.

Die bisher beschriebenen Ausführungsbeispiele basieren auf der Modulation der HF-Mischerausgangssignale. Die Modulation wurde also nur auf die empfangenen Signale angewendet. Zur Entstörung des Gesamtsystems macht es jedoch Sinn, daß die Modulation den gesamten Sende-/Empfangspfad des Systems umfasst. Damit dies erreicht werden kann, muß die Modulation schon im Sendepfad des Systems erfolgen. Hierzu folgen weitere Ausführungsbeispiele.

Gemäß einer dritten bevorzugten Ausführungsform der vorliegenden Erfindung wird vorgeschlagen, dass ein analog ansteuerbares Dämpfungsglied im Sendepfad des Sendesignals derart angesteuert wird, dass das Sendesignal analog amplitudenmoduliert wird. Die Modulation könnte bspw. durch ein Sinussignal erfolgen. Mit der Variation der Dämpfung der Amplitude der Sendepulse ändert sich die Amplitude des in dem Mischer aus reflektierten Einzelpulsen aufintegrierten äquivalenten Empfangspulses in der äquivalenten Zeitebene. Somit bietet die Variation der Dämpfung die Möglichkeit der analogen Modulation über den gesamten Sende-/Empfangspfad.

Gemäß einer vierten bevorzugten Ausführungsform der vorliegenden Erfindung wird vorgeschlagen, dass die Pulswiederholfrequenz (Pulse-Repetition-Frequency, PRF) des Sendesignals moduliert wird. Auch mit der Variation der Pulswiederholfrequenz ändert sich die Amplitude des im Mischer aus reflektierten Einzelpulsen aufintegrierten äquivalenten Empfangspulses in der äquivalenten Zeitebene. Somit bietet die Variation der Pulswiederholfrequenz die Möglichkeit der analogen Modulation über den gesamten Sende-/Empfangspfad.

Gemäß einer fünften bevorzugten Ausführungsform der vorliegenden Erfindung wird vorgeschlagen, dass die Pulsbreite (Pulse-Width-Modulation, PWM) des Sendesignals moduliert wird. Mit der Variation der Pulsbreite ändert sich die Gesamtenergie und damit ebenfalls die Amplitude des im Mischer aus reflektierten Einzelpulsen aufintegrierten äquivalenten Empfangspulses in der äquivalenten Zeitebene. Somit bietet die Variation der Sendepulsbreite die Möglichkeit der analogen Modulation über den gesamten Sende-/Empfangspfad.

Schließlich wird gemäß einer sechsten Ausführungsform vorgeschlagen, ein Steuersignal (PRF enable), das an einem Steuerausgang eines Mikrocomputers zur Steuerung des Verfahrens anliegt, mit einem Rechtecksignal zu modulieren. Über den Steuerausgang (PRF enable) wird die Generierung von Sendepulsen ermöglicht oder unterbunden. Diese Ausführungsform entspricht einer binären Pulsamplitudenmodulation (PAM) des Sendesignals. Diese Art der Modulation entspricht der im Rahmen des zweiten Ausführungsbeispiels beschriebenen Modulation, setzt allerdings schon im Sendepfad an, wodurch eine Modulation über den gesamten Sende-/Empfangspfad erreicht wird.

Es ist zur Verbesserung der Zuverlässigkeit der Detektion von Objekten in einem zu überwachenden Bereich bekannt, bei Verfahren der eingangs genannten Art das Empfangssignal oder das verzögerte Sendesignal in einem Abzweig jeweils um +/-PI/2 (also 90°) phasenzuverschieben. Im Rahmen des vergleichenden Messprinzips wird dann entweder das Empfangssignal und das phasenverschobene Empfangssignal jeweils in einem homodynen Mischer mit dem verzögerten Sendesignal oder aber das verzögerte Sendesignal und das phasenverschobene, verzögerte Sendesignal jeweils in einem homodynen Mischer mit dem Empfangssignal gemischt. Dieses Prinzip ist in der Literatur als I/Q-Mischung bekannt. Gemäß einer vorteilhaften Weiterbildung der vorliegenden Erfindung wird ausgehend von der I/Q-Mischung vorgeschlagen, dass das Sendesignal und/oder die Ausgangssignale der Mischer derart moduliert wird, dass die Spektren der Ausgangssignale beider Mischer auf eine höhere Frequenzebene ungleich Null angehoben werden. Dazu werden die oben beschriebenen Maßnahmen jeweils in den Signalpfaden beider Ausgangssignale vorgesehen.

Als weitere Lösung der vorliegenden Aufgabe wird ausgehend von der Vorrichtung der eingangs genannten Art eine Vorrichtung vorgeschlagen, die Mittel zum Durchführen des Verfahrens nach einem der Ansprüche 1 bis 13 aufweist.

Im Folgenden werden an Hand der Zeichnungen bevorzugte Ausführungsbeispiele der vorliegenden Erfindung näher erläutert. Es zeigen:

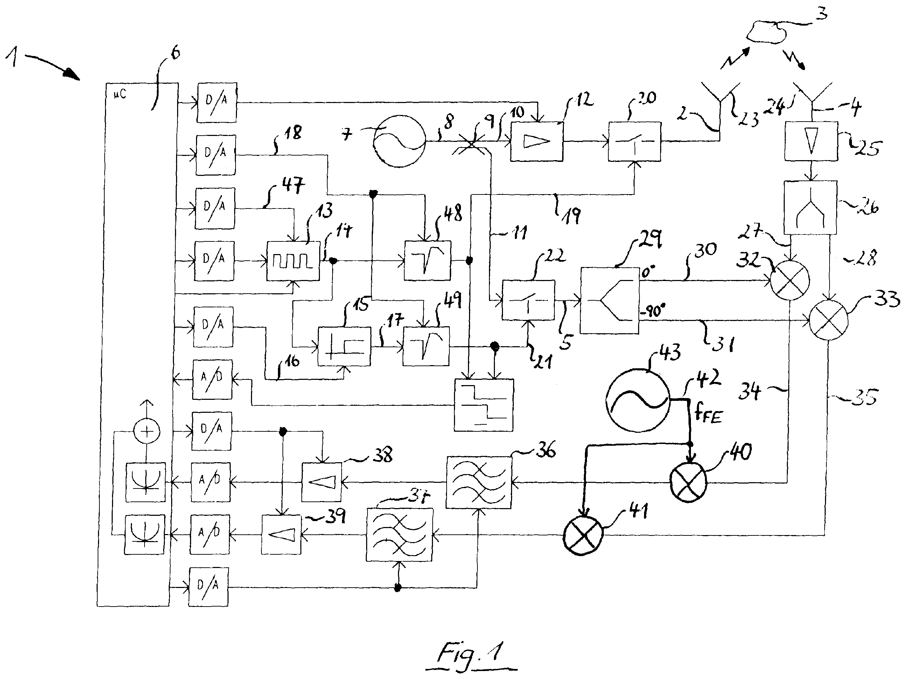

- Fig. 1: eine Vorrichtung zur Durchführung des erfindungsgemäßen Verfahrens gemäß eines ersten bevorzugten Ausführungsbeispiels;

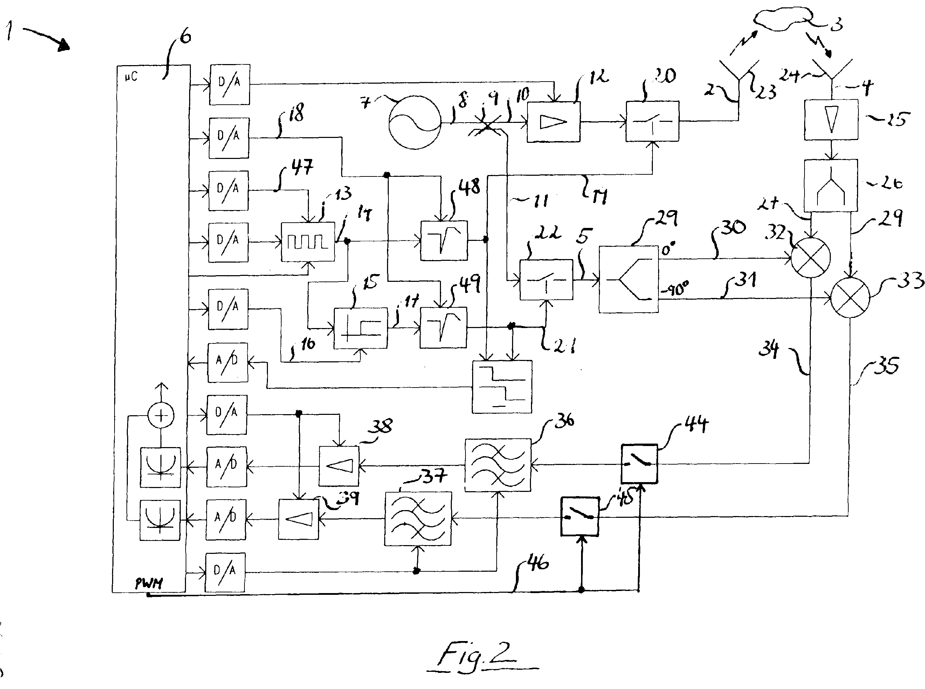

- Fig. 2: eine Vorrichtung zur Durchführung des erfindungsgemäßen Verfahrens gemäß eines zweiten bevorzugten Ausführungsbeispiels;

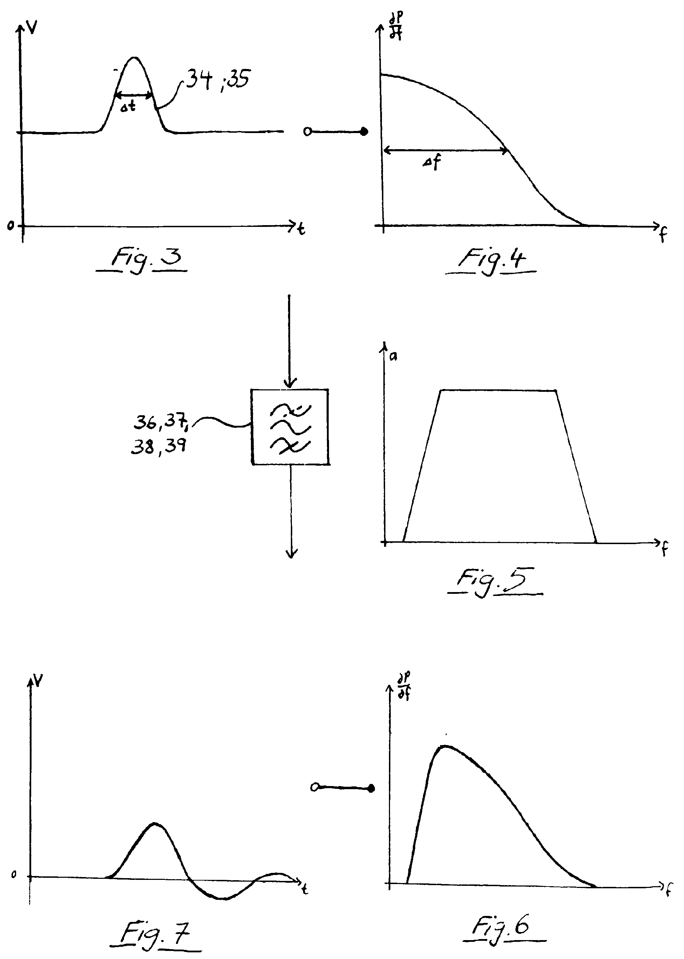

- Fig. 3: einen Signalpuls eines Ausgangssignals eines homodynen Mischers einer aus dem Stand der Technik bekannten Vorrichtung zum Bestimmen des Abstands zu einem Objekt mittels des Equivalent Time Sampling (ETS)-Verfahrens;
- Fig. 4: das Spektrum des Signalpulses aus Fig. 3;
- Fig. 5: das Spektrum eines Hochpassfilters;
- Fig. 6: das hochpassgefilterte Spektrum aus Fig. 4;
- Fig. 7: der Signalpuls aus Fig. 3 nach der Hochpassfilterung;

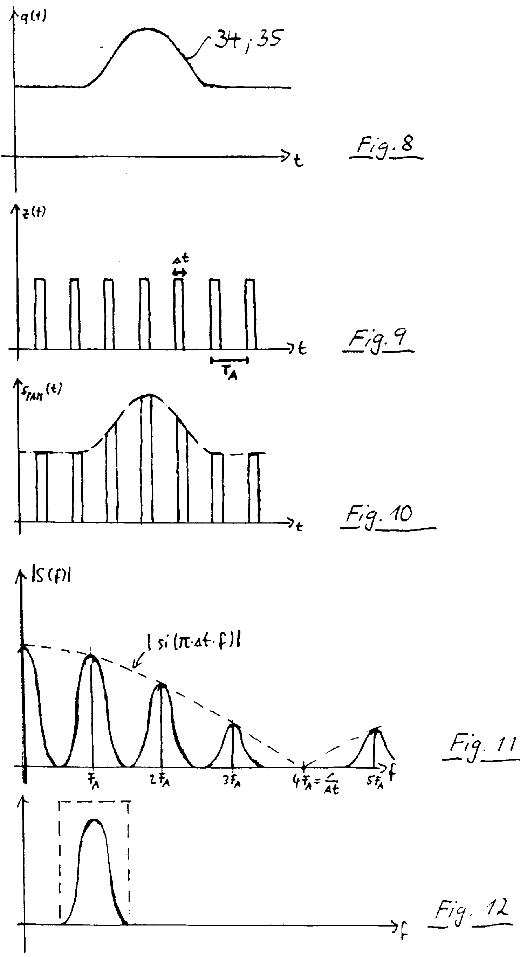

- Fig. 8: einen Signalpuls eines Ausgangssignals des homodynen Mischers der Vorrichtung gemäß Fig. 2;
- Fig. 9: ein Signal (PWM) zur Modulation der Pulsbreite des Sendesignals der Vorrichtung gemäß Fig. 2;
- Fig. 10: der Signalpuls gemäß Fig. 8 nach einer Pulsamplitudenmodulation durch das PWM-Signal gemäß Fig. 9;
- Fig. 11: das Spektrum des pulsamplitudenmodulierten Signalpuls gemäß Fig. 10; und
- Fig. 12: das auf die erste Harmonische gefilterte Spektrum gemäß Fig. 11.

In Fig. 1 ist eine Vorrichtung zum Bestimmen des Abstands zu einem Objekt mittels eines gepulsten elektromagnetischen Signals in ihrer Gesamtheit mit dem Bezugszeichen 1 gekennzeichnet. Vorrichtungen 1 werden bspw. bei Radar-Einparkhilfen oder bei Radar-Abstandsregelungsvorrichtungen im Kraftfahrzeugbereich eingesetzt. Von der Vorrichtung 1 aus wird ein gepulstes elektromagnetisches Signal 2 in Richtung eines Objekts 3 ausgesandt. Die Laufzeit des Signals 2 zu dem Objekt 3 und wieder zurück wird im Rahmen eines vergleichenden Messprinzips, das in der Fachliteratur als Equivalent Time Sampling (ETS)-Verfahren bekannt ist, gemessen. Durch das vergleichende Messprinzip werden die extrem kurzen Pulslaufzeiten des Signals 2 auf eine wesentlich längere Zeitskala gestreckt. Dazu wird ein langsam variierender Trigger vorgegeben, der sich über den zu vermessenden realen Laufzeitbereich schiebt. Der Trigger wird auch als Sweepsignal bezeichnet. Im Rahmen des vergleichenden Messprinzips wird ein Empfangssignal 4 in einem homodynen Mischer mit einem in der Vorrichtung 1 um eine variable Verzögerung verzögerten Sendesignal 5 bzw. mit dem Trägersignal der Sendesignale 2, 5 gemischt. Aus der ermittelten Laufzeit wird dann der Abstand zu dem Objekt 3 bestimmt.

Im einzelnen umfasst die Vorrichtung 1 einen Mikrocomputer 6, der den Ablauf des erfindungsgemäßen Verfahrens steuert. Der Mikrocomputer 6 ist über eine Vielzahl von D/A- und A/D-Wandler mit den analogen Bauteilen der Vorrichtung 1 verbunden. In einem Oszillator 7 wird das Trägersignal 8 der Sendesignale 2, 5 generiert. In einem Leistungsteiler 9 wird das Trägersignal 8 in ein Trägersignal 10 für das Sendesignal 2 und in ein Trägersignal 11 für das verzögerte Sendesignal 5 aufgesplittet. Das Trägersignal 10 wird in einem Dämpfungsglied 12 mit einer von dem Mikrocomputer 6 vorgegebenen Dämpfung gedämpft.

Der Mikrocomputer 6 steuert einen Pulswiederholgenerator 13 an, der ein Pulstriggersignal 14 ausgibt. Das Pulstriggersignal 14 wird an ein Verzögerungsglied 15 geführt, dessen Verzögerung von dem Mikrocomputer 6 mittels eines Sweepsignals 16 variiert werden kann. Das Pulstriggersignal 14 wie auch das verzögerte Pulstriggersignal 17 werden jeweils einem Pulsformer 48; 49 zugeführt. Die Pulsformer 48, 49 ermöglichen die Wahl einer variablen Pulslänge der Einhüllenden der Amplitudenmodulation des Trägersignals 8. Der Mikrocomputer 6 hat über einen D/A-Wandler Zugriff auf die Pulsformer 48, 49 und kann so die Pulsbreite der Pulse der Sendesignale 2 und der verzögerten Sendesignale 5 wählen.

Das Ausgangssignal 19 des Pulsformers 48 dient zur Ansteuerung eines ersten analogen Modulationsschalters 20, durch den die Pulse des Ausgangssignals 19 auf das Trägersignal 10 aufmoduliert werden und so das Sendesignal 2 gebildet wird. Das Ausgangssignal 21 des Pulsformers 49 dient zur Ansteuerung eines zweiten analogen Modulationsschalters 22, durch den die Pulse des Ausgangssignals 21 auf das Trägersignal 11 aufmoduliert werden und so das verzögerte Sendesignal 5 gebildet wird. Die Schalter 20, 22 sind als schnelle Hochfrequenzschalter ausgebildet. Der Zeitpunkt der Auslösung eines Pulses erfolgt durch die Pulstriggersignale 14, 17, welche die Pulsformer 48, 49 antriggern.

Das Sendesignal 2 wird von der Vorrichtung 1 mittels einer Sendeantenne 23 in Richtung des Objekts 3 ausgesandt, von diesem zumindest teilweise reflektiert und von der Vorrichtung 1 mittels einer Empfangsantenne 24 wieder empfangen. Das Empfangssignal 4 wird in einem Verstärker 25 verstärkt und von einer ersten Signalweiche 26 in zwei identische Signale 27, 28 aufgeteilt. Das verzögerte Sendesignal 5 wird von einer zweiten Signalweiche 29 ebenfalls in zwei Signal 30, 31 aufgeteilt, wobei das Signal 31 um -90° relativ zu dem Signal 30 phasenverschoben ist. In einem ersten homodynen Hochfrequenz (HF)-Mischer 32 werden die Signale 27 und 30 auf eine Frequenzebene gleich Null und in einem zweiten homodynen Hochfrequenz (HF)-Mischer 33 die Signale 28 und 31 ebenfalls auf eine Frequenzebene gleich Null gemischt. Die Ausgangssignale 34, 35 der HF-Mischer 32, 33 werden über adaptive Signalfilter 36, 37 und variable Verstärker 38, 39 zu dem Mikrocomputer 6 geführt.

Die in dem Pfad der Ausgangssignale 34, 35 der HF-Mischer 32, 33 angeordneten Signalfilter 36, 37 und Verstärker 38, 39 sind üblicherweise über Koppelkondensatoren DC-frei miteinander verbunden (sog. Hochpasskopplung). Dies ist notwendig, um bspw. Offsetdrifts eliminieren und Störquellen im niederfrequenten Bereich unterdrücken zu können.

Die Fig. 3 bis Fig. 7 beziehen sich auf eine aus dem Stand der Technik bekannte Vorrichtung zum Bestimmen des Abstands zu einem Objekt mittels eines gepulsten elektromagnetischen Signals. In Fig. 3 ist der Signalverlauf des Ausgangssignal 34 nach einer homodynen Mischung auf eine Frequenzebene gleich Null dargestellt. Alles was nachfolgend für das Ausgangssignal 34 gesagt wird, gilt ebenso für das Ausgangssignal 35. Fig. 4 zeigt das Spektrum des Ausgangssignals 34 aus Fig. 3. Wie in Fig. 3 und Fig. 4 gezeigt, ist das Ausgangssignal 34 (Fig. 3) des homodynen HF-Mischers 32 bzw. das Spektrum (Fig. 4) des Ausgangssignals 34 nicht DC-frei. Demgemäß führt eine Hochpasskopplung (vgl. Fig. 5) aufgrund der DC-frei miteinander verbunden Signalfilter 36, 37 und Verstärker 38, 39 zu einer Verzerrung und Verbreiterung der ursprünglichen Signalform des Ausgangssignals 34 im Zeitbereich (Fig. 7). In Fig. 7 ist deutlich zu erkennen, dass die Amplitude des hochpassgekoppelten Ausgangssignals 34 vermindert und der Signalpuls verbreitert ist. Die Hochpasskopplung führt ebenfalls zu einem Nachklingen und zu einer verschlechterten Auflösung bei der nachfolgenden Signalverarbeitung in dem Mikrocomputer 6. Falls in einem großen Nutzsignal auch kleinere Nutzsignale enthalten sind, steigt dadurch die Gefahr, dass die kleineren Nutzsignale nicht als solche von dem großen Nutzsignal unterschieden werden können. Das kann bei der aus dem Stand der Technik bekannten Vorrichtung dazu führen, dass kleinere Objekte in einem zu überwachenden Bereich vor oder hinter einem Kraftfahrzeug unerkannt bleiben.

Um die Auswirkung der Hochpasskopplung der Signalfilter 36, 37 und der Verstärker 38, 39, die den HF-Mischern 32, 33 nachgeordnet sind, auf die Ausgangssignale 34, 35 der HF-Mischer 32, 33 zu reduzieren bzw. sogar ganz zu vermeiden, ohne ein heterodynes Hochfrequenz (HF)-System einsetzen zu müssen, schlägt die Erfindung vor, das Sendesignal 2 und/oder die Ausgangssignale 34, 35 der HF-Mischer 32, 33 derart zu modulieren, dass die Spektren der Ausgangssignale 34, 35 auf eine höhere Frequenzebene ungleich Null angehoben werden. Insbesondere soll mit der vorliegenden Erfindung eine Verzerrung und Verbreiterung der hochpassgekoppelten Ausgangssignale 34, 35 vermieden werden.

Als erstes Ausführungsbeispiel wird in Fig. 1 vorgeschlagen, die Ausgangssignale 34, 35 der HF-Mischer 32, 33 jeweils durch einen weiteren Mischer 40; 41 mit einem sinusförmigen Mischsignal 42 einer vorgegebenen Frequenz f_FE ungleich Null zu mischen. Der weitere Mischer 40, 41 ist als ein Niederfrequenz (NF)-Mischer ausgebildet. Dadurch werden die Ausgangssignale 34, 35 auf eine höhere Frequenzebene angehoben. Das Mischsignal 42 wird von einem Niederfrequenz (NF)-Oszillator 43 erzeugt. Die Frequenz f_FE des Mischsignals gibt die Höhe der Frequenzebene vor. Die in dem weiteren Signalpfad der Ausgangssignale 34, 35 der HF-Mischer 32, 33 folgenden Hochpass- bzw. Bandpassfilter-Schaltungen können auf die vorgegebene Frequenzebene adaptiert werden.

Als zweites Ausführungsbeispiel wird in Fig. 2 vorgeschlagen, dass die Ausgangssignale 34, 35 der HF-Mischer 32, 33 jeweils durch einen Schalter 44; 45, der durch ein Rechtecksignal 46 einer vorgegebenen Frequenz ungleich Null getriggert wird, auf eine höhere Frequenzebene angehoben werden. Im Prinzip handelt es sich bei dieser Ausführungsform um eine Pulsamplitudenmodulation (PAM) der Ausgangssignale 34, 35. Die Ausgangssignale 34, 35 bilden dabei die modulierenden Quellsignale (Fig. 8), deren Spektren auf die Zeiger der Harmonischen des Rechtecksignals 46 (Fig. 9) gefaltet werden. Die Zeiger erhält man als Koeffizienten der Fourierreihe des Rechtecksignals 46. In der nachfolgenden Hochpass- bzw. Bandpassfilterung läßt man vorzugsweise die Nutzsignalspektren um die erste Harmonischen ungedämpft (vgl. Fig. 12). Die Spektren um die Harmonischen höherer Ordnung und bei Null (vgl. Fig. 11) werden dagegen gedämpft (vgl. Fig. 12). Damit wird die Systembandbreite auf das notwendige Minimum der Signalnutzbandbreite des Spektrums an der ersten Harmonischen reduziert und dadurch das Systemrauschen auf ein Minimum begrenzt.

Die Schalter 44, 45 werden von dem Mikrocomputer 6 durch das Rechtecksignal 46 getriggert. Als triggerndes Rechtecksignal 46 wird ein Pulstriggersignal 19; 21 verwendet, das an einem Pulse-Width-Modulation (PWM)-Ausgang des Mikrocomputers 6 anliegt. Die reziproke Periode des Pulstriggersignals 19; 21 gibt als erste Harmonische des Rechtecksignals 46 die Höhe der Frequenzebene vor, auf die die Ausgangssignale 34, 35 angehoben werden.

Es ist denkbar, nicht nur den Signalpfad ab den HF-Mischern 32, 33 bis zu der A/D-Wandlung, sondern den gesamten Sende-/ Empfangspfad in die Modulation zum Anheben der Ausgangssignale 34, 35 auf eine Frequenzebene mit einzubeziehen. Gemäß einer dritten bevorzugten Ausführungsform der vorliegenden Erfindung wird deshalb vorgeschlagen, dass das Dämpfungsglied 12 in dem Sendepfad des Sendesignals 2 derart angesteuert wird, dass das Sendesignal 2 moduliert wird (nicht dargestellt). Die Modulation könnte bspw. durch ein Sinussignal erfolgen.

Gemäß einer vierten bevorzugten Ausführungsform der vorliegenden Erfindung wird vorgeschlagen, dass die Pulswiederholfrequenz (Pulse-Repetition-Frequency, PRF) des Sendesignals 2 mittels eines PRF-Jitter-Signals 47 moduliert wird.

Schließlich wird gemäß einer fünften bevorzugten Ausführungsform der vorliegenden Erfindung vorgeschlagen, dass die Pulsbreite des Sendesignals 2 moduliert wird. Dies kann bspw. mittels einer Modulation des Pulsbreitensignals 18 (Pulse-Width-Modulation, PWM) durch den Mikrocontroller 6 erfolgen.

## Patentansprüche

1. Verfahren zum Bestimmen des Abstands zu einem Objekt (3) mittels eines gepulsten elektromagnetischen Signals (2), wobei die Laufzeit des Signals (2) zu dem Objekt (3) und wieder zurück im Rahmen eines vergleichenden Messprinzips durch Vergleich des Empfangssignals (4) mit dem um eine variable Verzögerung verzögerten Sendesignal (5) ermittelt und aus der ermittelten Laufzeit der Abstand zu dem Objekt (3) bestimmt wird, und wobei im Rahmen des vergleichenden Messprinzips das Empfangssignal (4) in einem homodynen Mischer (32; 33) mit dem verzögerten Sendesignal (5) gemischt wird, **dadurch gekennzeichnet,** dass das Sendesignal (2) und/oder das Ausgangssignal (34; 35) des Mischers (32; 33) derart moduliert wird, dass das Ausgangssignal (34; 35) des Mischers (32; 33) auf eine höhere Frequenzebene ungleich Null angehoben wird.

2. Verfahren nach Anspruch 1, dadurch gekennzeichnet, dass das Ausgangssignal (34; 35) des Mischers (32; 33) durch einen weiteren Mischer (40; 41) mit einem Mischsignal (42) einer vorgegebenen Frequenz (f_{_}FE) ungleich Null gemischt und auf die höhere Frequenzebene angehoben wird.

3. Verfahren nach Anspruch 2, dadurch gekennzeichnet, dass das Mischsignal (42) von einem Oszillator (43) erzeugt wird.

4. Verfahren nach Anspruch 1, dadurch gekennzeichnet, dass das Ausgangssignal (34; 35) des Hochfrequenz (HF)-Mischers (32; 33) durch einen analogen Modulationsschalter (44; 45), der durch ein Rechtecksignal (46) einer vorgegebenen Frequenz (f_{_}FE) ungleich Null geschaltet wird, auf die höhere Frequenzebene angehoben wird.

5. Verfahren nach Anspruch 4, dadurch gekennzeichnet, dass das Tastverhältnis des schaltenden Rechtecksignals (46) für eine variable Verstärkung des Ausgangssignals (34; 35) des Mischers (32; 33) verwendet wird.

6. Verfahren nach Anspruch 4, dadurch gekennzeichnet, dass der analoge Modulationsschalter (44; 45) mit der Abtastfrequenz eines in dem Signalpfad des Ausgangssignals (34; 35) dem Schalter (44; 45) nachgeordneten A/D-Wandlers getriggert wird, wobei die Abtastung des gefilterten und/oder verstärkten Signals mit dem A/D-Wandler um die Signallaufzeit durch Filterschaltungen (36, 37) und/oder Verstärkerschaltungen (38, 39), die zwischen dem Schalter (44; 45) und dem A/D-Wandler angeordnet sind, verzögert wird.

7. Verfahren nach Anspruch 6, dadurch gekennzeichnet, dass die Verzögerung aufgrund der Signallaufzeit durch die Filterschaltungen (36, 37) und/oder Verstärkerschaltungen (38, 39) durch ein autokalibrierendes Verfahren bestimmt wird.

8. Verfahren nach Anspruch 7, dadurch gekennzeichnet, dass von dem Algorithmus des autokalibrierenden Verfahrens ein stets vorhandenes Signal als Gütekriterium ausgenutzt wird.

9. Verfahren nach Anspruch 1, dadurch gekennzeichnet, dass ein analog ansteuerbares Dämpfungsglied (12) im Sendepfad des Sendesignals (2) derart angesteuert wird, dass das Sendesignal (2) analog amplitudenmoduliert wird.

10. Verfahren nach Anspruch 1, dadurch gekennzeichnet, dass die Pulswiederholfrequenz (PRF) des Sendesignals (2) moduliert wird.

11. Verfahren nach Anspruch 1, dadurch gekennzeichnet, dass die Pulsbreite (PWM) des Sendesignals (2) moduliert wird.

12. Verfahren nach Anspruch 1, dadurch gekennzeichnet, dass ein Steuersignal (PRF enable), das an einem Steuerausgang eines Mikrocomputers (6) zur Steuerung des Verfahrens anliegt, mit einem Rechtecksignal moduliert wird.

13. Verfahren nach einem der Ansprüche 1 bis 12, wobei das Empfangssignal (4) oder das verzögerte Sendesignal (5) jeweils um +/-PI/2 phasenverschoben wird und im Rahmen des vergleichenden Messprinzips das Empfangssignal und das phasenverschobene Empfangssignal jeweils in einem homodynen Mischer mit dem verzögerten Sendesignal (5) bzw. das verzögerte Sendesignal (30) und das phasenverschobene, verzögerte Sendesignal (31) jeweils in einem homodynen Mischer (32; 33) mit dem Empfangssignal (4) gemischt wird, dadurch gekennzeichnet, dass das Sendesignal (2) und/oder die Ausgangssignale (34, 35) der Mischer (32, 33) derart moduliert wird, dass die Spektren der Ausgangssignale (34, 35) beider Mischer (32, 33) auf eine höhere Frequenzebene ungleich Null angehoben werden.

14. Vorrichtung (1) zum Bestimmen des Abstands zu einem Objekt (3) mittels eines gepulsten elektromagnetischen Signals (2), wobei die Vorrichtung (1) Mittel (6, 25, 26, 36, 37, 38, 39) zum Ermitteln der Laufzeit des Signals (2) zu dem Objekt (3) und wieder zurück im Rahmen eines vergleichenden Messprinzips durch Vergleich des Empfangssignals (4) mit dem um eine variable Verzögerung verzögerten Sendesignal (5), Mittel (6) zum Bestimmen des Abstands zu dem Objekt (3) aus der ermittelten Laufzeit und einen homodynen Mischer (32; 33) zum Mischen des Empfangssignals (4) im Rahmen des vergleichenden Messprinzips mit dem verzögerten Sendesignal (5) aufweist, **dadurch gekennzeichnet,** dass die Vorrichtung (1) Mittel (40, 41, 43; 44, 45) zum Durchführen des Verfahrens nach einem der Ansprüche 1 bis 13 aufweist.
